# EUROPEAN PATENT SPECIFICATION

(11) **EP 3 992 484 B1**
(45) Date of publication and mention of the grant of the patent: **29.11.2023**
(21) Application number: 21198239.2
(22) Date of filing: 22.09.2021
(51) Int. Cl.: F16D 55/224, F16D 65/18, B61H 5/00

(54) **BRAKE CALIPER**
BREMSSATTEL
ÉTRIER DE FREIN

(30) Priority: 28.10.2020 JP 2020180842
(43) Date of publication of application: 04.05.2022
(73) Proprietor: NABTESCO CORPORATION, Chiyoda-ku Tokyo 102-0093 (JP)
(72) Inventor: Utsumi, Takashi, Tokyo, 102-0093 (JP)
(74) Representative: Grünecker Patent- und Rechtsanwälte PartG mbB

(56) References cited:
- EP-B1- 2 171 306
- JP-A- 2005 048 877
- US-A1- 2016 137 213

## Description

The present invention relates to a brake caliper.

Patent Literature 1 provides an example of a brake caliper that applies a braking force to a wheel of a railway vehicle by pressing a brake pad against a disc that rotates integrally with the wheel. The brake caliper includes a pair of left and right caliper levers to which brake pads are attached at the tips, an actuator that drives the left and right caliper levers such that they approach to and separate from the disc via the brake pads, and a body that rotatably holds the left and right caliper levers via rotating shafts. A gap adjuster is provided between proximal end portions of the left and right caliper levers. The caliper levers are held rotatably by the corresponding rotating shafts.

Patent Literature 1: JP 5174899 B2
US 2016/137213 A1 and JP 2005 048877A disclose a brake caliper according to the preamble of claim 1.

In the brake caliper described in Patent Document 1, a thrust bearing is provided between the caliper lever and the rotating shaft. The weights of the caliper lever, brake pads, and gap adjuster are then applied to the thrust bearing via the caliper lever. When braking is performed by the brake caliper, axial torque and rotational sliding load are applied to the thrust bearing. If a sliding resistance on the thrust bearing increases, there is a risk of reduced efficiency and increased wear.

It is an object of the present invention to provide a brake caliper that enables to reduce the sliding resistance between the caliper lever and the body. According to the present invention said object is solved by a brake caliper having the features of independent claim 1. Preferred embodiments are laid down in the dependent claims.

A brake caliper according one aspect of the invention includes: a caliper lever holding a brake pad; an actuator for driving the caliper lever; a body holding the actuator; a pin held in the body, an end of the pin being inserted into the caliper lever to support the caliper lever rotatably relative to the body; and a fluid retaining chamber for retaining fluid, the fluid retaining chamber being defined by the caliper lever and the end of the pin.

According to the above configuration, the fluid retaining chamber in which fluid is retained is defined by the caliper lever and the end of the pin, thus it is possible to prevent the caliper lever from contacting the end of the pin in the axial direction. Therefore, the sliding resistance between the caliper lever and the body can be reduced.

In the brake caliper, it is preferable that a pressure in the fluid retaining chamber be equal to or greater than a load applied to the caliper lever when braking is not performed. In the brake caliper, it is preferable that a radial bearing that corresponds to the load acting in a direction orthogonal to the axis of the pin be provided in the fluid retaining chamber.

In the brake caliper, it is preferable that the caliper lever include a pair of upper and lower levers, a connection rod that vertically connects the upper and lower levers be provided, the upper lever of the pair of upper and lower levers be connected to an upper end of the pin via the fluid retaining chamber, and the connection rod connect the upper and lower levers such that a gap is formed between the lower lever and an lower end of the pin.

In the brake caliper, it is preferable that a radial bearing that corresponds to the load acting in a direction orthogonal to the axis of the pin be provided in the gap. In the brake caliper, it is preferable that the fluid retained in the fluid holding chamber be air.

According to the above configuration, the air chamber in which the air is retained is defined by the upper caliper lever of the pair of upper and lower levers and the upper end of the pin, thus it is possible to prevent the upper caliper lever from contacting the end of the pin in the axial direction. In addition, since the gap is provided between the lower left lever of the pair of upper and lower levers and the lower end of the pin, it is also possible to prevent the lower lever from contacting the lower end of the pin in the axial direction. Therefore, the sliding resistance between the caliper lever and the body can be reduced.

According to the aspects of the invention, it is possible to reduce the sliding resistance between the caliper lever and the caliper body.
Fig. 1 is a perspective view of a brake caliper according to an embodiment showing its configuration.
Fig. 2 is cross sectional view of the brake caliper of the embodiment.
Fig. 3 is an exploded perspective view of the brake caliper of the embodiment.
Fig. 4 is partial sectional view of a left side of the brake caliper of the embodiment.
Fig. 5 is enlarged sectional view of the brake caliper of the embodiment showing a connection portion between an upper left lever and a left rotation pin.
Fig. 6 is enlarged sectional view of the brake caliper of the embodiment showing the connection portion between the upper left lever and the left rotation pin when assembled.
Fig. 7 is enlarged sectional view of the brake caliper of the embodiment showing a connection portion between a lower left lever and a left rotation pin.
Fig. 8 is enlarged sectional view of the brake caliper of the embodiment showing the connection portion between the lower left lever and the left rotation pin.
Fig. 9 is partial sectional view of a right side of the brake caliper of the embodiment.

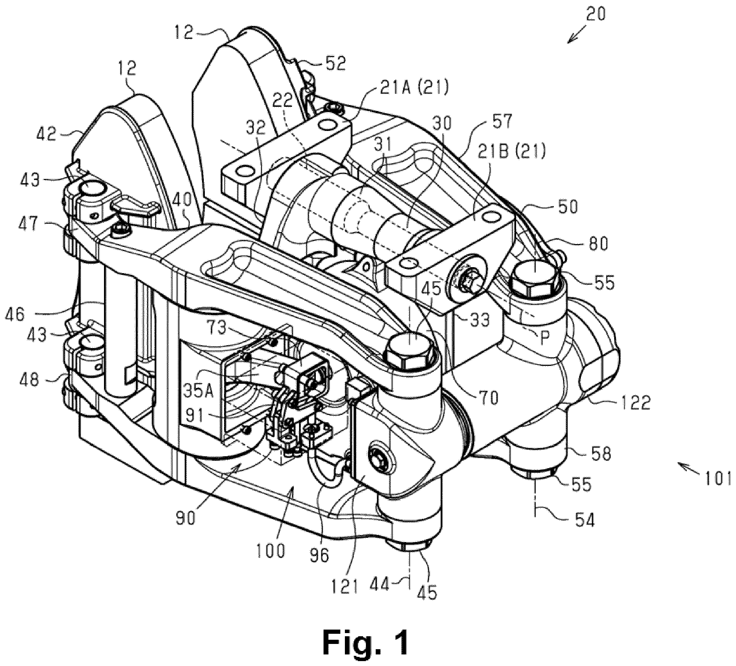

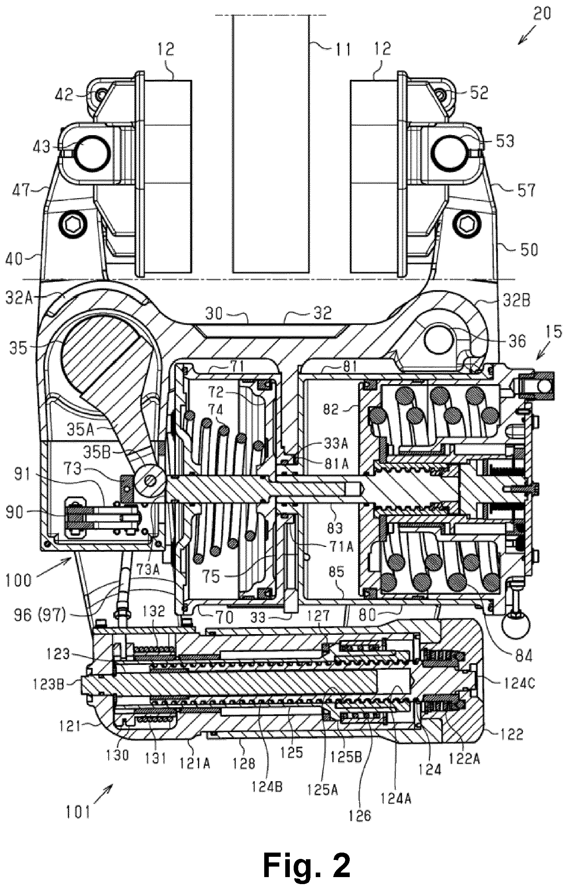

With reference to Figs. 1 to 9, one embodiment of the brake caliper will now be described. As shown in Figs. 1 and 2, a brake caliper 20 is mounted to a bogie (not shown) of a railway vehicle and configured to apply a braking force to a wheel of the bogie by pressing brake pads 12 against a disc 11 (see Fig. 2) that rotates integrally with an axle for rotating the wheel. The brake caliper 20 and the disc 11 form a disc brake device.

The brake caliper 20 includes a bracket 21 (see Fig. 1) mounted to the bogie, a body 30 rotatably hung on the bracket 21, and a pair of left and right caliper levers 40, 50 held by the body 30. The body 30 holds the pair of left and right caliper levers 40, 50 turnably such that the brake pads 12 are movable to a position where they are pressed against the disc 11 from both sides and a position where they do not contact the disc 11.

The brake caliper 20 further includes a cylinder device 15 that outputs a force to turn the left caliper lever 40 and the right caliper lever 50 relative to the disc 11 so that the brake pads 12 are pressed against the disc 11. The cylinder device 15 is driven by supply and discharge of compressed air. The compressed air fed to the cylinder device 15 is taken from a tank installed on the railroad car. The cylinder device 15 is removably mounted to the body 30. Here, the cylinder device 15 corresponds to an actuator.

The bracket 21 includes a first bracket 21A and a second bracket 21B. The body 30 is disposed between the first bracket 21A and the second bracket 21B. A connecting pin 22 penetrates through the first bracket 21A, the body 30, and the second bracket 21B to connect the first bracket 21A, the body 30, and the second bracket 21B. The body 30 has a base portion 31 through which the connecting pin 22 penetrates. The base portion 31 rotates about a rotational axis P that extends orthogonal to the axial direction of the axle of the bogie and extends along a direction in which the left caliper lever 40 and the right caliper lever 50 extend.

The body 30 includes a first support portion 32 that extends from below the base portion 31 toward the left and right caliper levers 40, 50 to support the left caliper lever 40 and right caliper lever 50. The body 30 also includes a second support portion 33 that extends from a center of the first support portion 32 toward a rear side in a longitudinal direction of the left and right caliper levers 40, 50 to support the cylinder device 15. The second support portion 33 is a plate-shaped member. The base portion 31, the first support portion 32, and the second support portion 33 of the body 30 are formed as a single unit body. When the bogie is tilted in the axial direction of the axle, the body 30 turns about the rotational axis P, and therefore, the brake pads 12 can be always retained in parallel with the disc 11.

A left support portion 32A for supporting the left caliper lever 40 is provided on the left side of the first support portion 32. A left rotation pin 35 penetrates through the left support portion 32A to support the left caliper lever 40 rotatably relative to the body 30. The left rotation pin 35 is held in the body 30 and is rotatable relative to the left support portion 32A. To the left rotation pin 35, there is fixed an operation lever 35A that is operated by a driving force of the cylinder device 15. A right support portion 32B for supporting the right caliper lever 50 is provided on the right side of the first support portion 32. Right rotation pins 36 penetrate through upper and lower portions of the right support portion 32A respectively to support the right caliper lever 50 rotatably relative to the body 30. The right rotation pin 36 is fixed to the right support portion 32B. The left rotation pin 35 and the right rotation pin 36 correspond to pins.

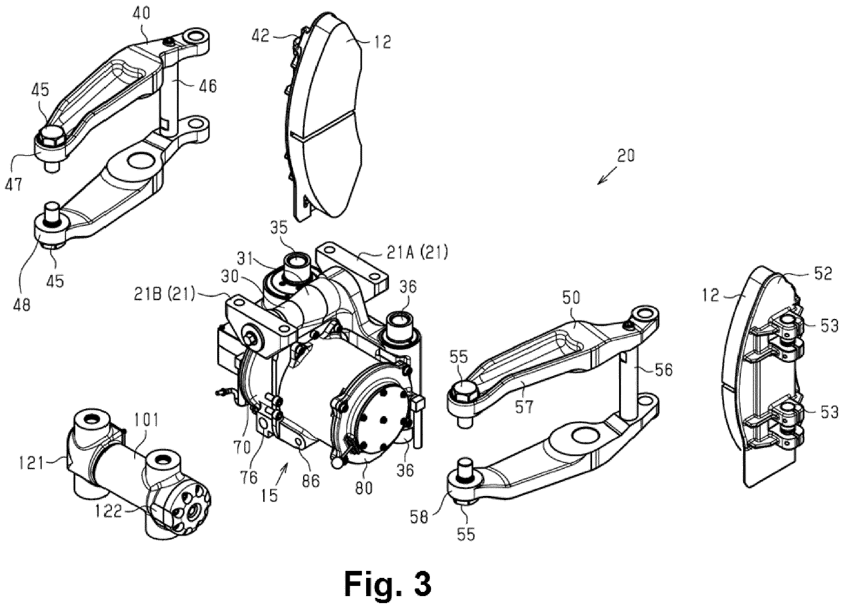

As shown in Fig. 3, the left caliper lever 40 includes a pair of upper left lever 47 and lower left lever 48. The upper left levers 47 and the lower left levers 48 are separated and face each other in the axial direction of the left rotation pin 35. A pad attaching member 42 to which the brake pad 12 is attached is connected to a tip of the left caliper lever 40 by two pad rotation pins 43 (see Fig. 1). The pad rotation pins 43 are rotatable relative to the upper left lever 47 and the lower left lever 48. The pad rotation pins 43 are fixed to the pad attaching member 42. The upper left lever 47 and the lower left lever 48 are connected to each other by a left lever connection pin 46.

The right caliper lever 50 includes a pair of upper right lever 57 and lower right lever 58. The upper right levers 57 and the lower right levers 58 are separated and face each other in the axial direction of the right rotation pin 36. A pad attaching member 52 to which the brake pad 12 is attached is connected to a tip of the right caliper lever 50 by two pad rotation pins 53. The pad rotation pins 53 are rotatable relative to the upper right lever 57 and the lower right lever 58. The pad rotation pins 53 are fixed to the pad attaching member 52. The upper right lever 57 and the lower right lever 58 are connected to each other by a right lever connection pin 56.

As shown in Fig. 2, the cylinder device 15 is mounted to the second support portion 33 of the body 30. The cylinder device 15 includes a service brake cylinder 70 and a parking brake cylinder 80. The surfaces of the second support portion 33 to which the service brake cylinder 70 and the parking brake cylinder 80 are mounted are perpendicular to the axle. The service brake cylinder 70 is mounted to the left-side surface of the second support portion 33 of the body 30. The parking brake cylinder 80 is mounted to the right-side surface of the second support portion 33 of the body 30. Therefore, the service brake cylinder 70 and the parking brake cylinder 80 are disposed such that the second support portion 33 of the body 30 is flanked by the service brake cylinder 70 and the parking brake cylinder 80. The surfaces of the second support portion 33 to which the service brake cylinder 70 and the parking brake cylinder 80 are mounted are parallel with the direction in which the left caliper lever 40 and the right caliper lever 50 extend and are parallel with the surfaces of the brake pads 12.

As shown in Fig. 3, each of the service brake cylinder 70 and the parking brake cylinder 80 is fixed to the second support portion 33 with four bolts. The service brake cylinder 70 and the parking brake cylinder 80 are bolted to difference positions in the second support portion 33. Therefore, the service brake cylinder 70 and the parking brake cylinder 80 can be mounted to and removed from the second support portion 33 separately.

As shown in Fig. 2, the second support portion 33 of the body 30 has an opening 33A formed in a middle of the second support portion 33. The opening 33A is elongated in the longitudinal direction of the left caliper lever 40 and the right caliper lever 50. Therefore, when mounting and removing the service brake cylinder 70 and the parking brake cylinder 80, the service brake cylinder 70 and the parking brake cylinder 80 can be moved in the opening 33A in the longitudinal direction of the left and right caliper levers 40, 50.

The service brake cylinder 70 can be removed from the left-side surface of the second support portion 33 of the body 30 by removing the volts. The parking brake cylinder 80 can be removed from the right-side surface of the second support portion 33 of the body 30 by removing the bolts. A gap adjusting device 100 can be removed from the left caliper lever 40 and the right caliper lever 50 by removing a bolt 45 and a bolt 55. Therefore, the cylinder device 15 and the gap adjusting device 100 can be readily removed and mounted for inspection and replacement. Any number of bolts may be used to fix the cylinder device 15.

The service brake cylinder 70 includes a first cylinder chamber 71, a first piston 72, a first rod 73, and a first spring 74. The first piston 72 moves within the first cylinder chamber 71. The first rod 73 is fixed to the first piston 72 and projected from the first cylinder chamber 71. The first spring 74 biases the first piston 72 in such a direction as to place the first rod 73 into the first cylinder chamber 71. The space in the first cylinder chamber 71 not including the first spring 74 is referred to as the first space 75. The service brake cylinder 70 includes a first feeding port 76 for feeding a compressed air into the first space 75 of the first cylinder chamber 71 (see Fig. 3). The first feeding port 76 is provided outside the first cylinder chamber 71. In the service brake cylinder 70, a compressed air fed into the first space 75 of the first cylinder chamber 71 presses the first piston 72, such that the first rod 73 is projected. In the service brake cylinder 70, when the compressed air is discharged from the first space 75 of the first cylinder chamber 71, the first piston 72 is presses by the first spring 74, such that the first rod 73 is placed into the first cylinder 71. The first rod 73 corresponds to an output rod of the service brake cylinder 70. The first cylinder chamber 71 corresponds to a casing of the service brake cylinder 70.

The parking brake cylinder 80 includes the second cylinder chamber 81, a second piston 82, a second rod 83, and a second spring 84. The second piston 82 moves within the second cylinder chamber 81. The second rod 83 is fixed to the second piston 82 and projected from the second cylinder chamber 81 into the first cylinder chamber 71. The second spring 84 biases the second piston 82 in such a direction as to project the second rod 83 from the second cylinder chamber 81. The space in the second cylinder chamber 81 not including the second spring 84 is referred to as the second space 85. The parking brake cylinder 80 includes a second feeding port 86 (see Fig. 3) for feeding a compressed air into the second space 85 of the second cylinder chamber 81. The second feeding port 86 is provided outside the second cylinder chamber 81. In the parking brake cylinder 80, a compressed air fed into the second space 85 of the second cylinder chamber 81 presses the second piston 82, such that the second rod 83 is placed into the second cylinder 81. In the parking brake cylinder 80, when the compressed air is discharged from the second space 85 of the second cylinder chamber 81, the second piston 82 is presses by the second spring 84, such that the second rod 83 is projected from the second cylinder chamber 81 into the first cylinder chamber 71 to press the first piston 72, and thus the first rod 73 is projected. The second rod 83 corresponds to an output shaft of the parking brake cylinder 80. The second cylinder chamber 81 corresponds to a casing of the parking brake cylinder 80.

The first cylinder chamber 71 includes a first projecting portion 71A that projects into the opening 33A. The second cylinder chamber 81 includes a second projecting portion 81A that projects into the opening 33A. The second projecting portion 81A is penetrated by the second rod 83. The first projecting portion 71A is fitted around the second projecting portion 81A. Therefore, the first rod 73 of the service brake cylinder 70 and the second rod 83 of the parking brake cylinder 80 are positioned coaxially, and the output of the parking brake cylinder 80 is transmitted to the service brake cylinder 70.

A roller that rotates is attached to the distal end of the operation lever 35A. The first rod 73 of the cylinder device 15 includes a receiving portion 73A provided in the distal end of the first rod 73. The receiving portion 73A is a through-hole that receives and contacts the roller 35B. The receiving portion 73A transmits the driving force of the first rod 73 to the operation lever 35A, while absorbing the lag between the linear movement of the first rod 73 and the rotational movement of the operation lever 35A.

As shown in Figs. 1 and 2, the brake caliper 20 includes a gap adjusting device 100 for adjusting the gaps between the brake pads 12 and the disc 11. The gap adjusting device 100 includes a gap adjuster 101 that adjusts the gap and a gap output unit 90 that outputs a gap to the gap adjuster 101. The gap output unit 90 includes a wire 96, and a traction unit 91 that pulls the wire 96 in accordance with a displacement of the first rod 73 of the cylinder device 15. The gap adjuster 101 connects a proximal end portion of the left caliper lever 40 and a proximal end portion of the right caliper lever 50. The left caliper lever 40 and the gap adjuster 101 are rotatably coupled to each other with a pair of bolts 45 opposed vertically. The right caliper lever 50 and the gap adjuster 101 are rotatably coupled to each other with a pair of bolts 55 opposed vertically. The left caliper lever 40 and the gap adjuster 101 rotate about a rotational axis 44, and the right caliper lever 50 and the gap adjuster 101 rotate about a rotational axis 54.

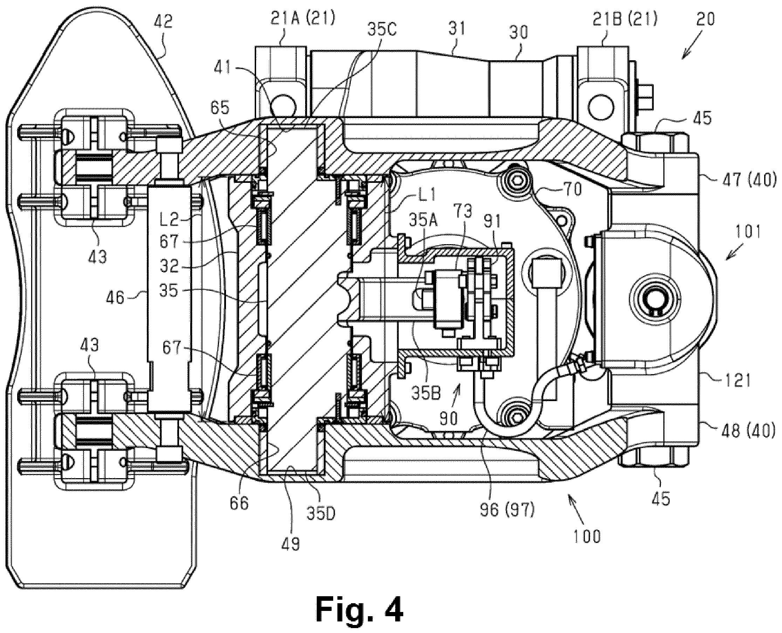

As shown in Fig. 4, an upper end 35C of the left rotation pin 35 is inserted in the upper left lever 47. The upper end 35C of the left rotation pin 35 is rotatable relative to the upper left lever 47. A lower end 35D of the left rotation pin 35 is inserted in the lower left lever 48. The lower end 35D of the left rotation pin 35 is rotatable relative to the lower left lever 48. The upper end 35C and the lower end 35D of the left rotation pin 35 are located coaxially and eccentrically with respect to a central axis of the left rotation pin 35. Thus, when the left rotation pin 35 is rotated, the upper end 35C and lower end 35D of the left rotation pin 35 move with the central axis of the left rotation pin 35 as the rotation center to drive the left caliper lever 40.

A distance L1 between an upper end surface and a lower end surface of the portion of the first support portion 32 of the body 30 where the left rotation pin 35 penetrates is set smaller than a distance L2 between opposing end surfaces of the upper left lever 47 and the lower left lever 48 (L1 < L2).

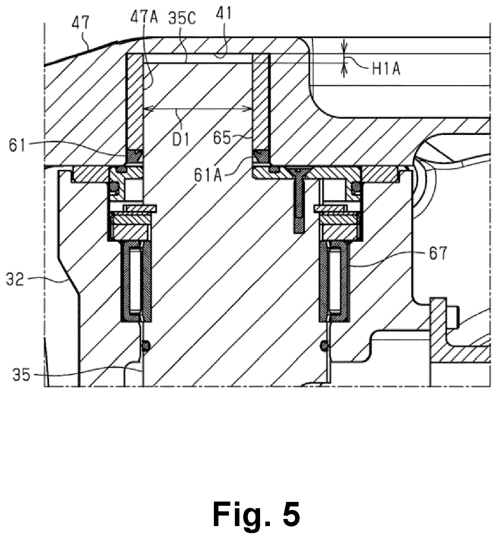

As shown in Figure 5, an air chamber 41 is defined by the upper left lever 47 and the upper end 35C of the left rotation pin 35. A fluid, which is the air in this embodiment, is held in the air chamber 41. The air chamber 41 corresponds to a fluid retaining chamber. The air in the air chamber 41 is compressed by inserting the upper end 35C of the left rotation pin 35 into a space 47A provided in the upper left lever 47. An annular upper seal member 61 is provided at an entrance of the space 47A in the upper left lever 47 to seal the air chamber 41. An inner periphery of the upper seal member 61 contacts the outer periphery of the upper end 35C of the left rotation pin 35. The upper seal member 61 has a lip 61A facing the inside of the air chamber 41. The upper seal member 61 prevents the air from leaking from the air chamber 41 to the outside. The pressure in the air chamber 41 is set to be greater than the atmospheric pressure.

The pressure in the air chamber 41 is set to be greater than a load applied to the upper left lever 47 when braking is not performed. The load applied to the upper left lever 47 is the weight of components connected to the upper left lever 47. In other words, the load applied to the upper left lever 47 includes the weight of the upper left lever 47, the weight of the lower left lever 48, the weight of the left lever connection pin 46, the weight of the left brake pad 12, the weight of the left pad attaching member 42, the weight of the left pad rotation pin 43, and the weight of the gap adjuster 101. Thus, the air chamber 41 is not squashed by the load applied to the upper left lever 47, and the space in the air chamber 41 is maintained. The pressure in the air chamber 41 may be equal to the load applied to the upper left lever 47.

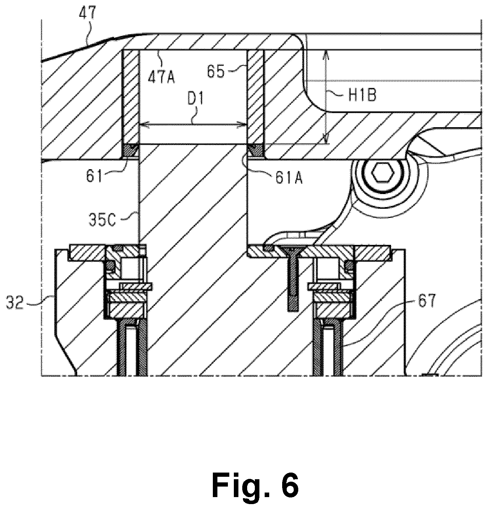

As shown in Fig. 6, before inserting the upper end 35C of the left rotation pin 35 into the space 47A of the upper left lever 47, the pressure in the space 47A of the upper left lever 47 is equal to the atmospheric pressure because it is open to the atmosphere. In other words, a pressure P1B in the space 47A of the upper left lever 47 is calculated by multiplying a volume V1B of the space 47A of the upper left lever 47 by the atmospheric pressure PA. Specifically, expressed as V1B = π(D1/2)^2 × H1B. Thus, the pressure P1B is obtained as P1B = V1B × PA = π(D1/2)^2 × H1B × PA.

When the upper end 35C of the left rotation pin 35 is inserted into the space 47A of the upper left lever 47, the air in the space 47A of the upper left lever 47 is compressed. Specifically, when the outer circumference of the upper end 35C of the left rotation pin 35 contacts the lip 61A of the upper seal member 61, the air in the space 47A of the upper left lever 47 stops flowing out therefrom and the air in the space 47A of the upper left lever 47 starts to be compressed. Then, as shown in Fig. 5, the upper end 35C of the left rotation pin 35 is inserted into the space 47A of the upper left lever 47, and the air chamber 41 that has a height H1A is formed. Since the air in the air chamber 41 is the compressed air in the space 47A of the upper left lever 47, the pressure P1A in the air chamber 41 is equivalent to the pressure P1B (P1A=P1B). Therefore, the pressure P1A of the air chamber 41 is greater than the atmospheric pressure. Also, since the pressure P1A in the air chamber 41 is determined by the volume V1B of the space 47A of the upper left lever 47, the volume V1B of the space 47A is set such that the pressure P1A becomes larger than the load applied to the upper left lever 47.

Since the upper left lever 47 and the upper end 35C of the left rotation pin 35 are connected via the air chamber 41, the upper left lever 47 can be supported by an air spring. The load applied to the end surface of the upper end 35C of the left rotation pin 35 can be reduced, and thereby it is possible to reduce wear at the end surface of the upper end 35C of the left rotation pin 35. The air chamber 41 here serves as a gravity compensation mechanism that generates a vertical upward force at the connection between the upper left lever 47 and the upper end 35C of the left rotation pin 35 to support the weight including the weight of the upper left lever and the load applied to the upper left lever 47.

An upper end radial bearing 65 is provided inside the air chamber 41. The upper end radial bearing 65 contacts the outer periphery of the upper end 35C of the left rotation pin 35 in a direction orthogonal to the axis of the left rotation pin 35. For example, a needle bearing is used as the upper end radial bearing 65. When the left rotation pin 35 is rotated and the upper end 35C of the left rotation pin 35 moves, the upper end 35C of the left rotation pin 35 contacts the upper end radial bearing 65 and thereby reducing contact friction between the upper end 35C of the left rotation pin 35 and the upper left lever 47.

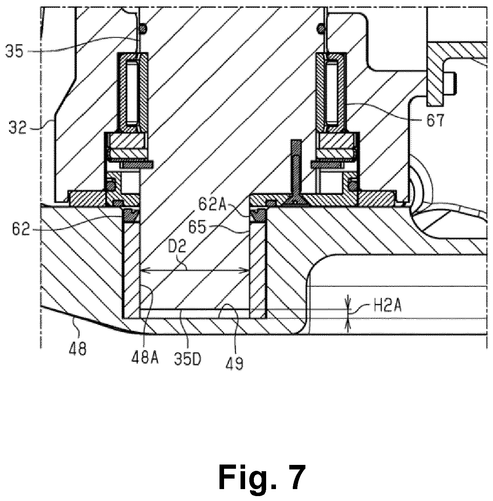

As shown in Fig. 7, a gap 49 is provided between the lower left lever 48 and the lower end 35D of the left rotation pin 35. The left lever connection pin 46 connects the upper left lever 47 and the lower left lever 48 such that the gap 49 is formed between the lower left lever 48 and the lower end 35D of the left rotation pin 35. The gap 49 is formed by inserting the lower end 35D of the left rotation pin 35 into a space 48A in the lower left lever 48. An annular lower seal member 62 is provided at the entrance of the space 48A in the lower left lever 48. An inner periphery of the lower seal member 62 contacts the outer periphery of the lower end 35D of the left rotation pin 35. The lower seal member 62 has a lip 62A that faces the outside of the gap 49. Thus, the lower seal member 62 allows the air to flow outward from the gap 49. This prevents the air in the gap 49 from pushing the left rotation pin 35 toward the upper left lever 47 and thereby it prevents weakening of the effect of the pressure in the air chamber 41 pushing up the upper left lever 47.

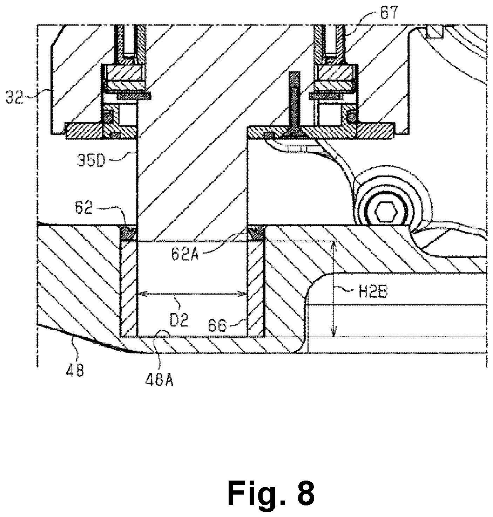

As shown in Fig. 8, before inserting the lower end 35D of the left rotation pin 35 into the space 48A of the lower left lever 48, the pressure in the space 48A of the lower left lever 48 is equal to the atmospheric pressure because it is open to the atmosphere. In other words, a pressure P2B in the space 48A of the lower left lever 48 is calculated by multiplying a volume V2B of the space 48A of the lower left lever 48 by the atmospheric pressure PA. Specifically, expressed as V2B = π(D2/2)^2 × H2B. Thus, the pressure P2B is obtained as P2B = V2B × PA = π(D2/2)^2 × H2B × PA.

When the lower end 35D of the left rotation pin 35 is inserted into the space 48A of the lower left lever 48, the air in the space 48A of the lower left lever 48 flows out to the outside as the lip 62A of the lower seal member 62 opens outward. Then, as shown in Fig. 7, the lower end 35D of the left rotation pin 35 is inserted into the space 48A of the lower left lever 48, and a gap 49 that has a height H2A is formed. The air in the gap 49 is maintained at the atmospheric pressure.

A lower end radial bearing 66 is provided in the space 48A that forms the gap 49 of the lower left lever 48. The lower end radial bearing 66 contacts the lower end 35C of the left rotation pin 35 in the direction orthogonal to the axis of the left rotation pin 35. For example, a needle bearing is used as the lower end radial bearing 66. When the left rotation pin 35 is rotated and the lower end 35D of the left rotation pin 35 moves, the lower end 35D of the left rotation pin 35 contacts the lower end radial bearing 66 and thereby reducing contact friction between the lower end 35D of the left rotation pin 35 and the lower left lever 48.

As shown in Fig. 4, two body radial bearings 67 are provided and arranged in the vertical direction between the outer periphery of the left rotation pin 35 and the body 30. When the left rotation pin 35 is rotated and the left rotation pin 35 contacts the body radial bearing 67, thereby reducing contact friction between the left rotation pin 35 and the body 30. For example, a needle bearing is used as the body radial bearing 67.

As shown in Fig, 9, the right rotation pin 36 has an upper right rotation pin 36A and a lower right rotation pin 36B. The upper right rotation pin 36A and the lower right rotation pin 36B are situated on the same axis. The upper right rotation pin 36A is inserted into the upper right lever 57. The upper right lever 57 is rotatable relative to the upper right rotation pin 36A. The lower right rotation pin 36B is inserted into the lower right lever 58. The lower right lever 58 is rotatable relative to the lower right rotation pin 36B.

A distance L3 between an upper end surface and a lower end surface of the portion of the first support portion 32 of the body 30 where the right rotation pin 36 penetrates is set smaller than a distance L4 between the opposing end surfaces of the upper left lever 57 and the lower left lever 58 (L3 < L4).

An air chamber 51 is defined by the upper right lever 57 and the upper right rotation pin 36A. A fluid, which is the air in this embodiment, is held in the air chamber 51. The air chamber 51 corresponds to a fluid retaining chamber. The air chamber 51 is formed by inserting the upper right rotation pin 36 into a space 57A provided in the upper right lever 57. The annular upper seal member 61 is provided at an entrance of the space 57A in the upper right lever 57 to seal the air chamber 51. The inner periphery of the upper seal member 61 contacts the outer periphery of the upper right rotation pin 36A. The upper seal member 61 has a lip 61A facing the inside of the air chamber 51. The upper seal member 61 prevents the air from leaking from the air chamber 51 to the outside. An internal pressure of the air chamber 51 is set to be greater than the atmospheric pressure.

The pressure in the air chamber 51 is set to be greater than a load applied to the upper right lever 57 when braking is not performed. The load applied to the upper right lever 57 is the weight of components connected to the upper right lever 57. In other words, the load applied to the upper right lever 57 includes the weight of the upper right lever 57, the weight of the lower right lever 58, the weight of the right lever connection pin 56, the weight of the right brake pad 12, the weight of the right pad attaching member 42, the weight of the right pad rotation pin 53, and the weight of the gap adjuster 101. Thus, the air chamber 51 is not squashed by the load applied to the upper right lever 57, and the space in the air chamber 51 is maintained. The pressure in the air chamber 51 may be equal to the load applied to the upper right lever 57.

Since the upper right lever 57 and the right rotation pin 36A are connected via the air chamber 51, the upper right lever 57 can be supported by an air spring. The load applied to the end surface of the right rotation pin 36A can be reduced, and thereby it is possible to reduce wear at the end surface of the right rotation pin 36A. The air chamber 51 here serves as a gravity compensation mechanism that generates a vertical upward force at the connection between the upper right lever 57 and the right rotation pin 36A to support the weight including the weight of the upper right lever and the load applied to the upper right lever 57.

An upper end radial bearing 65 is provided inside the air chamber 51. The upper end radial bearing 65 corresponds to a load acting in the direction orthogonal to the axis of the upper right rotation pin 36A. For example, a needle bearing is used as the upper end radial bearing 65. Thus, when the upper right lever 57 is rotated, the upper right rotation pin 36A contacts the upper end radial bearing 65, thereby reducing contact friction between the right rotation pin 36A and the upper right lever 57.

A gap 59 is provided between the lower right lever 58 and the lower right rotation pin 36B. The right lever connection pin 56 connects the upper right lever 58 and the lower right lever 58 such that the gap 59 is formed between the lower right lever 58 and the lower right rotation pin 36B. The gap 59 is formed by inserting the lower right rotation pin 36B into a space 58A provided in the lower right lever 58. The annular lower seal member 62 is provided at the entrance of the space 58A in the lower right lever 58. The inner periphery of the upper seal member 62 contacts the outer periphery of the lower right rotation pin 36B. The lower seal member 62 has the lip 62A that faces the outside of the gap 59. Thus, the lower seal member 62 allows the air to flow outward from the gap 59. This prevents the air in the gap 59 from pushing the lower right lever 58, thereby it prevents weakening of the effect of the pressure in the air chamber 51 pushing up the upper right lever 57 via the upper lever connection pin 56.

A lower end radial bearing 66 is provided in the space that forms the gap 59 of the lower right lever 58. The lower end radial bearing 66 corresponds to a load acting in the direction orthogonal to the axis of the lower right rotation pin 36B. For example, a needle bearing is used as the lower end radial bearing 66. When the lower right lever 58 is rotated, the lower right rotation pin 36B contacts the lower end radial bearing 66, thereby reducing contact friction between the lower right rotation pin 36B and the lower right lever 58.

As shown in Fig. 2, the gap adjusting device 100 adjusts the distance between the proximal end portion of the left caliper lever 40 and the proximal end portion of the right caliper lever 50 to adjust the gaps between the brake pads 12 and the disc 11. Further, when the gaps between the brake pads 12 and the disc 11 are increased due to wear of the brake pads 12, the gap adjusting device 100 increases the distance between the proximal end portion of the left caliper lever 40 and the proximal end portion of the right caliper lever 50, thereby reducing the distances between the brake pads 12 and the disc 11.

When the displacement of the first rod 73 is greater than a predetermined value, the traction unit 91 pulls the wire 96. In other words, the traction unit 91 rotates and pulls the wire 96 when the first rod 73 protrudes and reaches the predetermined value and contacts the traction unit 91.

As shown in Fig. 1, the gap adjuster 101 includes the first casing 121 and the second casing 122. The first casing 121 is connected between the proximal end portions of the pair of the upper and lower left levers 47, 48. The first casing 121 and the pair of upper and lower left levers 47, 48 are rotatably coupled with each other by the bolt 45. The second casing 122 is connected between the proximal end portions of the pair of the upper and lower right levers 57, 58. The second casing 122 and the pair of upper and lower right levers 57, 58 are rotatably coupled with each other by the bolt 55.

As shown in Fig. 2, the first casing 121 includes an extension portion 121A having a cylindrical shape and extending toward the second casing 122. A polygonal rod 123 shaped like a polygonal column is fixed to the first casing 121. The polygonal rod 123 is disposed in the extending direction of the extension portion 121A of the first casing 121.

The proximal end portion of the polygonal rod 123 projects to the outside of the first casing 121. The proximal end portion of the polygonal rod 123 includes a hexagonal portion 123B shaped like a hexagonal column. The hexagonal portion 123B of the polygonal rod 123 can be manually rotated to adjust the gaps between the brake pads 12 and the disc 11.

A cylindrical screw shaft 124 shaped like a cylinder and extending toward the first casing 121 is fixed to the second casing 122. The screw shaft 124 has a cylindrical space 124A formed therein. The space 124A is open at the first casing 121 side only. The space 124A in the screw shaft 124 receives the polygonal rod 123 therein. The outer periphery of the screw shaft 124 has an external thread at the portion other than the portion fixed to the second casing 122. The screw shaft 124 is supported by a support spring 122A. The proximal end portion of the screw shaft 124 includes a hexagonal portion 124C shaped like a hexagonal column. The hexagonal portion 124C of the screw shaft 124 can be manually rotated to adjust the gaps between the brake pads 12 and the disc 11. Therefore, the gaps can be adjusted on both sides of the gap adjuster 101 and thus can be adjusted by a large amount at one time, resulting in an increased efficiency and ease of an adjustment work in maintenance.

An adjustment nut 125 shaped like a cylinder is provided on the outer periphery of the screw shaft 124. A part of the inner wall of the adjustment nut 125 has an internal thread 125A that engages with an external thread 124B of the screw shaft 124. The adjustment nut 125 rotates relative to the screw shaft 124 while engaging with the external thread 124B of the screw shaft 124. Specifically, when the screw shaft 124 moves away from the polygonal rod 123, the adjustment nut 125 is rotated by the external thread 124B of the screw shaft 124 and the internal thread 125A of the adjustment nut 125.

The adjustment nut 125 is positioned between the extension portion 121A of the first casing 121 and the screw shaft 124. The outer periphery of the adjustment nut 125 has a ridge 125B provided thereon. The ridge 125B projects toward the inner wall of the extension portion 121A of the first casing 121. Between the adjustment nut 125 and the extension portion 121A of the first casing 121, there is provided an anti-vibration spring 126 that biases the ridge 125B toward the first casing 121 side in the axial direction of the adjustment nut 125. The anti-vibration spring 126 is formed of a coil spring and is provided on the outer periphery of the adjustment nut 125. Since the ridge 125B of the adjustment nut 125 is biased by the anti-vibration spring 126, the effect of vibration can be reduced. A contact clutch 127 is provided between the adjustment nut 125 and the extension portion 121A of the first casing 121. When the ridge 125B is pressed toward the left caliper lever 40 in the axial direction, the contact clutch 127 contacts the surface of the ridge 125B that is perpendicular to the axial direction to control rotation of the adjustment nut 125. The second casing 122 has a cylindrical cover 128 fixed thereto. The cylindrical cover 128 covers the first casing 121.

A wire attaching portion 130 to which the wire 96 is connected is provided on a portion of the screw shaft 124 closer to the first casing. A one-way clutch 131 is provided between the adjustment nut 125 and the extension portion 121A of the first casing 121. The wire attaching portion 130 is fixed to the one-way clutch 131. The one-way clutch 131 and the wire attaching portion 130 rotate together. The one-way clutch 131 permits rotation of the adjustment nut 125 for elongation of the gap adjuster 101 and controls rotation of the adjustment nut 125 for shortening of the gap adjuster 101. A spring 132 is provided to the one-way clutch 131. In other words, when the wire 96 is pulled by the traction unit 91, the one-way clutch 131 and the wire attaching portion 130 rotate clockwise when viewed from the left side, and the spring 132 is compressed. When the pull of the wire 96 is stopped, the force of the spring 132 causes the one-way clutch 131 and the wire attaching portion 130 to rotate backward (counterclockwise) together with the adjustment nut 125 to extend the gap adjuster 101.

Next, the operation of the brake caliper 20 will now be described. With additional reference to Fig. 2, a description is given of the operation of the brake caliper 20 and the gap adjusting device 100 performed before the brake pads 12 are worn.

As shown in Fig. 2, the brake caliper 20 is configured such that a compressed air is fed into the first space 75 of the service brake cylinder 70 of the cylinder device 15 to actuate the service brake. The first rod 73 of the service brake cylinder 70 moves in such a direction as to project from the first cylinder chamber 71 along with the first piston 72, thereby driving the operation lever 35A clockwise via the roller 35B. At this time, if the friction of the brake pads 12 is small and the displacement (protruding amount) of the first rod 73 is less than the predetermined value, the first rod 73 does not contact the traction unit 91.

When the first rod 73 moves in a direction in which the first rod 73 projects from the first cylinder chamber 71, the operation lever 35A rotates clockwise together with the left rotation pin 35. The clockwise rotation of the left rotation pin 35 causes the left caliper lever 40 to rotate about the rotational axis 44 in such a direction that the left brake pad 12 contacts the disc 11, and thus the left brake pad 12 contacts the disc 11. Since the upper left lever 47 and the upper end 35C of the left rotation pin 35 are connected via the air chamber 41, the end surface of the upper end 35C of the left rotation pin 35 does not come into contact with the upper left lever 47 when the left rotation pin 35 rotates.

After the left brake pad 12 contacts the disc 11, the left caliper lever 40 rotates clockwise about the pad rotation pin 43. When the left caliper lever 40 rotates about the pad rotation pin 43, the right caliper lever 50 rotates counterclockwise about the right rotation shaft 36 via the rotational axis 44, the gap adjuster 101, and the rotational axis 54, and the right brake pad 12 contacts the disc 11. Thus, both sides of the disc 11 are pressed by the left and right brake pads 12 to limit the rotation of the disc 11. The braking is adjusted by the pressing force of the brake pads 12. Since the upper right lever 57 and the upper right rotation pin 35 are connected via the air chamber 51, the end surface of the right rotation pin 36A does not come into contact with the upper right lever 57 when the upper right rotation pin 36A rotates.

When the compressed air is discharged from the second space 85 of the parking brake cylinder 80 and the second rod 83 projects from the second cylinder chamber 81, the second rod 83 presses the first piston 72 and the first rod 73, resulting in the same operation as when the first rod 73 projects from the first cylinder chamber 71.

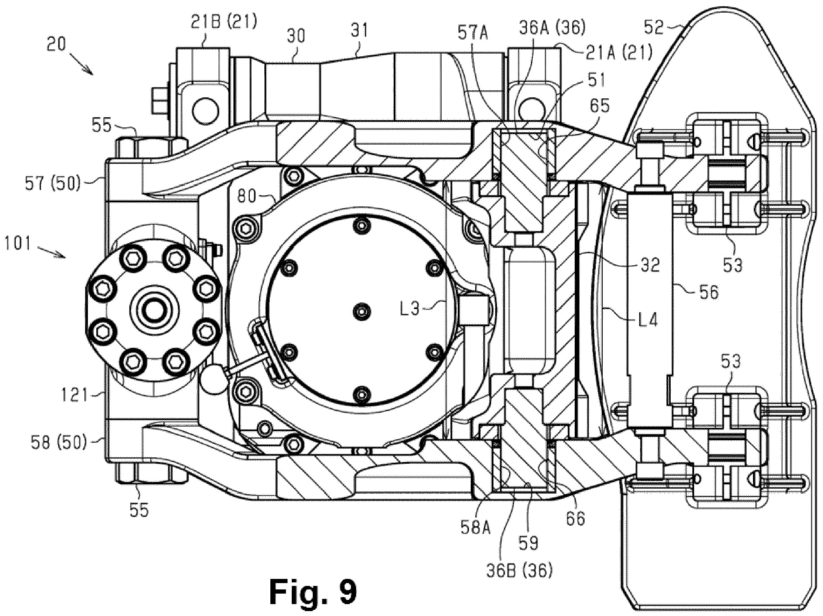

When the left and right brake pads 12 press the disc 11 that rotates downward relative to the brake pads 12, the brake pads 12 follow the disc and move in the rotational direction of the disc 11. As shown in Fig. 4, when the left brake pad 12 moves downward following the disc, the upper left lever 47 is allowed to move closer to the left rotation pin 35 because the distance L1 between the left end surfaces of the first support portion 32 of the body 30 is smaller than the distance L2 between the opposing end surfaces of the upper left lever 47 and the lower left lever 48. And since the upper left lever 47 and the upper end 35C of the left rotation pin 35 are connected to each other through the air chamber 41, contact between the upper left lever 47 and the upper end 35C of the left rotation pin 35 is less likely to occur. In addition, the outer periphery of the upper end 35C of the left rotation pin 35 contacts the upper end radial bearing 65 provided in the air chamber 41 so that the contact friction is reduced. As shown in Fig. 9, when the right brake pad 12 moves downward following the disc, the upper right lever 57 is allowed to move closer to the upper right rotation pin 36A because the distance L3 between the right end surfaces of the first support portion 32 of the body 30 is smaller than the distance L4 between the opposing end surfaces of the upper right lever 57 and the lower right lever 58. And since the upper right lever 57 and the upper right rotation pin 36A are connected to each other through the air chamber 51, contact between the upper right lever 57 and the upper right rotation pin 36A is less likely to occur. In addition, the outer periphery of the upper right rotation pin 36A contacts the upper end radial bearing 65 provided in the air chamber 51 so that the contact friction is reduced.

When the left and right brake pads 12 press the disc 11 that rotates downward relative to the brake pads 12, the brake pads 12 follow the disc and move in the rotational direction of the disc 11. As shown in Fig. 4, when the left brake pad 12 moves upward following the disc, the upper left lever 47 is allowed to move away from the left rotation pin 35 because the distance L1 between the left end surfaces of the first support portion 32 of the body 30 is smaller than the distance L2 between the opposing end surfaces of the upper left lever 47 and the lower left lever 48. The movement of the upper left lever 47 moves the left rotating pin 35 closer to the upper left lever 47 via the left lever connection pin 46 and the lower left lever 48. Since the upper left lever 47 and the upper end 35C of the left rotation pin 35 are connected to each other through the air chamber 41, contact between the upper left lever 47 and the upper end 35C of the left rotation pin 35 is less likely to occur. In addition, the outer periphery of the upper end 35C of the left rotation pin 35 contacts the upper end radial bearing 65 provided in the air chamber 41 so that the contact friction is reduced. As shown in Fig. 9, when the right brake pad 12 moves upward following the disc, the upper right lever 57 is allowed to move away from the right rotation pin 36A because the distance L3 between the right end surfaces of the first support portion 32 of the body 30 is smaller than the distance L4 between the opposing end surfaces of the upper left lever 57 and the lower left lever 58. Since the upper right lever 57 and the upper right rotation pin 36A are connected to each other through the air chamber 51, separation between the upper right lever 57 and the upper right rotation pin 36A is less likely to occur. In addition, the outer periphery of the upper right rotation pin 36A contacts the upper end radial bearing 65 provided in the air chamber 51 so that the contact friction is reduced.

Next, a description is given of the operation of the brake caliper 20 and the gap adjusting device 100 performed when the brake pads 12 are worn. When the brake pads 12 are worn, the service brake cylinder 70 also operates in the same manner with a compression air fed thereto, and the amount of movement of the first rod 73 increases with the amount of wear of the brake pads 12. When the amount of wear of the brake pads 12 increases until the amount of movement of the first rod 73 is equal to or larger than a predetermined value, the gap adjusting device 100 operates. Specifically, the gap adjuster 101 is elongated to shorten the gaps between the brake pads 12 and the disc 11.

When the displacement of the first rod 73 exceeds a predetermined value, the tip of the first rod 73 contacts and rotates with the traction unit 91, causing the wire 96 to be pulled. When the wire 96 is pulled, the wire attaching portion 130 rotates clockwise together with the one-way clutch 131. The condition that the amount of movement of the first rod 73 is equal to or larger than a predetermined value corresponds to the condition that the gaps between the brake pads 12 and the disc 11 are equal to or larger than a prescribed value.

Subsequently, in the brake caliper 20, when the left brake pad 12 and the right brake pad 12 sandwich the disc 11 to generate a compressive force in the gap adjuster 101, the screw shaft 124 acts to rotate the adjustment nut 125 in the direction for shortening. At this time, the rotation of the adjustment nut 125 is controlled by the frictional force between the contact clutch 127 and the ridge 125B of the adjustment nut 125 and by the one-way clutch 131. Therefore, the screw shaft 124 does not move in the direction for shortening, and the sandwiching force of the brake caliper 20 is maintained, thus generating a braking force.

Subsequently, in the brake caliper 20, when feeding of the compressed air to the service brake cylinder 70 is stopped to release the brake, the first rod 73 returns to the first cylinder chamber 71. The contact between the first rod 73 and the traction section 91 is lost, and the wire 96 is not pulled by the traction section 91 anymore. When the pull of the wire 96 is stopped, the force of the spring 132 causes the one-way clutch 131 and the wire attaching portion 130 to rotate backward (counterclockwise) together with the adjustment nut 125. At this time, since the one-way clutch 131 does not rotate in the elongation direction, it rotates counterclockwise together with the adjustment nut 125. This increases the entire length of the gap adjuster 101, resulting in a larger distance between the proximal end portion of the left caliper lever 40 and the proximal end portion of the right caliper lever 50 and smaller gaps between the brake pads 12 and the disc 11.

Advantageous effects of the above embodiment will be now described. (1) Since the air chamber 41 that holds the air is defined by the upper left lever 47 and the upper end 35C of the left rotation pin 35, it is possible to prevent the upper left lever 47 from contacting the upper end 35C of the left rotation pin 35 in the axial direction. Therefore, the sliding resistance between the upper left lever 47 and the body 30 can be reduced. Similarly, since the air chamber 51 is defined by the upper right lever 57 and the upper right rotation pin 36A, it is possible to prevent the upper right lever 57 from contacting the upper right rotation pin 36A in the axial direction. Therefore, the sliding resistance between the upper right lever 57 and the body 30 can be reduced.

(2) Since the pressure P1A in the air chamber 41 is equal to or greater than the load applied to the upper left lever 47 when braking is not performed, it is possible to reduce the chance of contact between the upper left lever 47 and the left rotation pin 35 in the axial direction even when including the weight of the upper left lever 47 and the weight of the brake pad 12. Likewise, since the pressure in the air chamber 51 is equal to or greater than the load on the upper right lever 57, it is possible to reduce the chance of contact between the upper right lever 57 and the upper right rotation pin 36A in the axial direction even when including the weight of the upper right lever 57 and the weight of the brake pad 12.

(3) Since the upper end radial bearing 65 is provided in the air chambers 41, 51, there is no need to provide a separate space for the upper end radial bearing 65, thereby saving the installation space. In addition, it is possible to reduce the sliding resistance generated when the upper end 35C of the left rotation pin 35 comes into contact with the upper left lever 47 in the direction intersecting the axis of the upper end 35C of the left rotation pin 35. Likewise, it is possible to reduce the sliding resistance generated when the upper right rotation pin 36A comes into contact with the upper right lever 57 in the direction intersecting the axis of the upper right rotation pin 36A.

(4) Since the upper left lever 47 and the upper end 35C of the left rotation pin 35 are connected via the air chamber 41, it is possible to prevent the upper left lever 47 from contacting the upper end 35C of the left rotation pin 35 in the axial direction. Similarly, the upper right lever 57 and the upper right rotation pin 36A are connected via the air chamber 51, it is possible to prevent the upper right lever 57 from contacting the upper right rotation pin 36A in the axial direction. In addition, since the gap 49 is provided between the lower left lever 48 and the lower end 35C of the left rotation pin 35, it is possible to prevent the lower left lever 48 from contacting the lower end 35D of the left rotation pin 35 in the axial direction. Similarly, since the gap 59 is provided between the lower right lever 58 and the lower right rotation pin 36B, it is possible to prevent the lower right lever 58 from contacting the lower right rotation pin 36B in the axial direction. Therefore, it is possible to further reduce the sliding resistance between the left and right caliper levers 40, 50 and the body 30.

(5) Since the lower end radial bearing 66 is provided in the gaps 49, 59, there is no need to provide a separate space for the lower end radial bearing 66, thereby saving the installation space. In addition, it is possible to reduce the sliding resistance generated when the lower end 35D of the left rotation pin 35 comes into contact with the lower left lever 48 in the direction intersecting the axis of the lower end 35D of the left rotation pin 35. Likewise, it is possible to reduce the sliding resistance generated when the lower right rotation pin 36B comes into contact with the lower right lever 58 in the direction intersecting the axis of the lower right rotation pin 36B.

### Other Embodiments

The foregoing embodiments can be modified as described below. The above embodiment and the following modifications can be implemented in combination to the extent where they are technically consistent to each other. The following embodiments are not according to the invention and are present for illustration purposes only.
•In the above embodiment, the lower end radial bearing 66 is provided in the gaps 49, 59. However, the lower end radial bearing 66 may be omitted.
•In the above embodiment, the upper end radial bearing 65 is provided in air chambers 41, 51. However the upper end radial bearings 65 may be omitted.
•In the above embodiment, the pressure in the air chamber 41 is made larger or equal to the load applied to the upper left lever 47. Alternatively, the pressure in the air chamber 41 may be made smaller than the load applied to the upper left lever 47, taking into account that the brake pads 12 gradually wear out and lose their weight. In this case, in the beginning, the upper left lever 47 contacts the upper end 35C of the left rotation pin 35, and the lower left lever 48 does not contact the lower end 35D of the left rotation pin 35. Once the brake pads 12 wear out and lose weight, the pressure in the air chamber 41 becomes greater than the load on the upper left lever 47. Then, the upper left lever 47 does not contact the upper end 35C of the left rotation pin 35 anymore, and the lower left lever 48 comes into contact with the lower end 35D of the left rotation pin 35. In this way, the contact portion is shifted from the upper end 35C of the left rotation pin 35 to the lower end 35D of the left rotation pin 35, thereby reducing the load applied to each of the upper end 35C and lower end 35D of the left rotation pin 35.
•In the above embodiment, the pressure in the air chamber 51 is made larger or equal to the load applied to the upper left lever 57 when braking is not performed. Alternatively, the pressure in the air chamber 51 may be made smaller than the load applied to the upper right lever 57, taking into account that the brake pads 12 gradually wear out and lose their weight. In this case, in the beginning, the upper right lever 57 contacts the upper right rotation pin 36A, and the lower right lever 58 does not contact the lower right rotation pin 36B. Once the brake pads 12 wear out and lose weight, the pressure in the air chamber 51 becomes greater than the load on the upper right lever 57. Then, the upper right lever 57 does not contact the upper right rotation pin 36A anymore, and the lower right lever 58 comes into contact with the lower right rotation pin 36B. In this way, the contact portion is shifted from the upper right rotation pin 36A to the lower right rotation pin 36B, thereby reducing the load applied to each of the upper right rotation pin 36A and the upper right rotation pin 36B.
•In the above embodiment, the pressure in the air chamber 51 is made larger or equal to the load applied to the upper right lever 57 when braking is not performed. Alternatively, the pressure in the air chamber 51 may be made larger or equal to the load applied to the upper right lever 57 when braking is performed. In this way, even if a large load is applied during braking, it is possible to reduce the chance of contact between the upper right lever 57 and the upper right rotation pin 36A.
•In the above embodiment, the gap 49 is provided between the lower left lever 48 and the lower end 35D of the left rotation pin 35. Alternatively, an air chamber for retaining the air may be defined by the lower left lever 48 and the lower end 35D of the left rotation pin 35. In this way, it is possible to prevent the lower left lever 48 from contacting the lower end 35D of the left rotation pin 35 in the axial direction. In the above embodiment, the gap 49 can be switched to an air chamber by inverting the top and bottom of the lower seal member 62 and installing it such that the lip 62A of the lower seal member 62 faces the inside of the air chamber and inserting the lower end 35D of the left rotation pin 35 into the lower left lever 48.
•In the above embodiment, the gap 59 is provided between the lower right lever 58 and the lower right rotation pin 36B. Alternatively, an air chamber for retaining the air may be defined by the lower right lever 58 and the lower right rotation pin 36B. In this way, it is possible to prevent the lower right lever 58 from contacting the lower right rotation pin 36B in the axial direction. In the above embodiment, the gap 59 can be switched to an air chamber by inverting the top and bottom of the lower seal member 62 and installing it such that the lip 62A of the lower seal member 62 faces the inside of the air chamber and inserting the lower right rotation pin 36B into the lower right lever 58.
•In the above embodiment, the distance L1 between the upper end surface and the lower end surface of the portion of the first support portion 32 of the body 30 where the left rotation pin 35 penetrates is set smaller than the distance L2 between the opposing end surfaces of the upper left lever 47 and the lower left lever 48 (L1 < L2). Alternatively, the distance L1 between the end surfaces may be set equal to the distance L2 between the opposing end surfaces of the upper left lever 47 and the lower left lever 48.
•In the above embodiment, the distance L3 between the upper end surface and the lower end surface of the portion of the first support portion 32 of the body 30 where the right rotation pin 36 penetrates is set smaller than the distance L4 between the opposing end surfaces of the upper left lever 57 and the lower left lever 58 (L3 < L4). Alternatively, the distance L3 between the end surfaces may be set equal to the distance L4 between the opposing end surfaces of the upper right lever 57 and the lower right lever 58.
•In the above embodiment, the left rotation pin 35 penetrates the body 30. Alternatively, the left rotation pin 35 does not have to penetrate the body 30 provided that the body 30 has a structure to hold the left rotation pin 35.
•In the above embodiment, the right rotation pin 36 penetrates the body 30. Alternatively, the right rotation pin 36 does not have to penetrate the body 30 provided that the body 30 has a structure to hold the right rotation pin 36.
•In the above embodiment, the fluid in the fluid retaining chamber is air. Alternatively, the fluid in the fluid retaining chamber may be oil.
•In the above embodiment, the cylinder device 15 is employed as the actuator, but any other device such as a motor may be used as the actuator.

In the above embodiments, an object composed of multiple components may be integrated into a single body object, or conversely, an object composed of a single component may be divided into multiple components. As long as it is configured such that the purpose of the invention can be achieved, such components may be integrated or separately provided. The invention is only limited within the scope of the appended claims.

### LIST OF REFERENCE NUMBERS

- 10: bogie
- 11: disc
- 12: brake pad
- 15: cylinder device
- 20: brake caliper
- 21: bracket
- 21A: first bracket
- 21B: second bracket
- 22: connection pin
- 30: body
- 31: base
- 32: first support member
- 33: second support member
- 33A: opening
- 35: left rotation pin
- 35A: operation lever
- 35B: roller
- 35C: upper end
- 35D: lower end
- 36: right rotation pin
- 36A: upper right rotation pin
- 36B: lower right rotation pin
- 40: left caliper lever
- 41: air chamber
- 42: pad attaching member
- 43: pad rotation pins
- 44: rotational axis
- 45: holt
- 46: left lever connection pin
- 47: upper left lever
- 47A: space
- 48: lower left lever
- 48A: space
- 49: gap
- 50: right caliper lever
- 51: air chamber
- 52: pad attaching member
- 53: pad rotation pins
- 54: rotational axis
- 55: bolt
- 56: right lever connection pin
- 57: upper right lever
- 57A: space
- 58: lower right lever
- 58A: space
- 59: gap
- 61: upper seal member
- 62: lower seal member
- 62A: lip
- 65: upper end radial bearing
- 66: lower end radial bearing
- 67: body radial bearing
- 70: service brake cylinder
- 80: parking brake cylinder
- 90: gap output unit
- 91: traction unit
- 96: wire
- 97: outer tube
- 100: gap adjusting device
- 101: gap adjuster
- 121: first casing
- 122: second casing
- 123: polygonal rod
- 123A: space
- 123B: hexagonal portion
- 124: screw shaft
- 124A: space
- 124B: external thread
- 124C: hexagonal portion
- 125: adjustment nut
- 125A: internal thread
- 126: anti-vibration spring
- 127: contact clutch
- 128: cover
- 130: wire attaching portion
- 131: one-way clutch
- 132: spring

## Claims

1. A brake caliper (20), comprising:
a caliper lever (40, 50) holding a brake pad (12);
an actuator (15) for driving the caliper lever (40, 50);
a body (30) holding the actuator (15); and
a pin (35, 36) held in the body (30), an end of the pin (35, 36) being inserted into the caliper lever (40, 50) to support the caliper lever (40, 50) rotatably relative to the body (30) **characterized by** a fluid retaining chamber (41, 51) for retaining fluid, the fluid retaining chamber (41, 51) being defined by the caliper lever (40, 50) and the end of the pin (35, 36).

2. The brake caliper (20) of claim 1, wherein a pressure in the fluid retaining chamber (41, 51) is equal to or greater than a load applied to the caliper lever (40, 50) when braking is not performed.

3. The brake caliper (20) of claim 1 or 2, wherein a radial bearing (65) that corresponds to a load acting in a direction orthogonal to an axis of the pin (35, 36) is provided in the fluid retaining chamber (41, 51).

4. The brake caliper (20) of any one of claims 1 to 3, wherein the caliper lever (40, 50) includes a pair of upper and lower levers (47, 48, 57, 58),
wherein a connection rod (46, 56) that vertically connects the upper and lower levers (47, 48, 57, 58) is provided,
wherein the upper lever (47, 57) of the pair of upper and lower levers (47, 48, 57, 58) is connected to an upper end of the pin (35, 36) via the fluid retaining chamber (41, 51), and
wherein the connection rod (46, 56) connects the pair of upper and lower levers (47, 48, 57, 58) such that a gap (49, 59) is formed between a lower lever (48, 58) of the pair of upper and lower levers (47, 48, 57, 58) and an lower end of the pin (35, 36).

5. The brake caliper (20) of claim 4, wherein a radial bearing (66) that corresponds to a load acting in a direction orthogonal to an axis of the pin (35, 36) is provided in the gap (49, 59).

6. The brake caliper (20) of any one of claims 1 to 5, wherein the fluid retained in the fluid holding chamber (41, 51) is air.

## Patentansprüche

1. Bremssattel (20), der umfasst:
einen Bremssattel-Hebel (40, 50), der einen Bremsbelag (12) hält;
ein Stellglied (15) zum Antreiben des Bremssattel-Hebels (40, 50);
einen Körper (30), der das Stellglied (15) hält; sowie
einen Stift (35, 36), der in dem Körper (30) gehalten wird, wobei ein Ende des Stiftes (35, 36) in den Bremssattel-Hebel (40, 50) eingeführt ist, um den Bremssattel-Hebel (40, 50) relativ zu dem Körper (30) drehbar zu lagern, **gekennzeichnet durch** eine Fluid-Rückhaltekammer (41, 51) zum Zurückhalten von Fluid, wobei die Fluid-Rückhaltekammer (41, 51) durch den Bremssattel-Hebel (40, 50) und das Ende des Stiftes (35, 36) definiert ist.

2. Bremssattel (20) nach Anspruch 1, wobei ein Druck in der Fluid-Rückhaltekammer (41, 51) genauso stark ist wie oder stärker als eine auf den Bremssattel-Hebel (40, 50) ausgeübte Last, wenn kein Bremsen durchgeführt wird.

3. Bremssattel (20) nach Anspruch 1 oder 2, wobei ein Radiallager (65), das einer Last entspricht, die in einer Richtung orthogonal zu einer Achse des Bolzens (35, 36) wirkt, in der Fluid-Rückhaltekammer (41, 51) vorhanden ist.

4. Bremssattel (20) nach einem der Ansprüche 1 bis 3, wobei der Bremssattel-Hebel (40, 50) paarige obere und untere Hebel (47, 48, 57, 58) einschließt,
eine Verbindungsstange (46, 56) vorhanden ist, die die oberen und unteren Hebel (47, 48, 57, 58) vertikal verbindet,
der obere Hebel (47, 57) der paarigen oberen und unteren Hebel (47, 48, 57, 58) über die Fluid-Rückhaltekammer (41, 51) mit einem oberen Ende des Stiftes (35, 36) verbunden ist, und
die Verbindungsstange (46, 56) die paarigen oberen und unteren Hebel (47, 48, 57, 58) so verbindet, dass ein Spalt (49, 59) zwischen einem unteren Hebel (48, 58) der paarigen oberen und unteren Hebel (47, 48, 57, 58) und einem unteren Ende des Stiftes (35, 36) gebildet wird.

5. Bremssattel (20) nach Anspruch 4, wobei ein Radiallager (66), das einer Last entspricht, die in einer Richtung orthogonal zu einer Achse des Stiftes (35, 36) wirkt, in dem Spalt (49, 59) vorhanden ist.

6. Bremssattel (20) nach einem der Ansprüche 1 bis 5, wobei das in der Fluid-Rückhaltekammer (41, 51) zurückgehaltene Fluid Luft ist.

## Revendications

1. Étrier de frein (20), comprenant :
un levier d'étrier (40, 50) maintenant une plaquette de frein (12) ;
un actionneur (15) pour entraîner le levier d'étrier (40, 50) ;
un corps (30) maintenant l'actionneur (15) ; et
une broche (35, 36) maintenue dans le corps (30), une extrémité de la broche (35, 36) étant insérée dans le levier d'étrier (40, 50) pour supporter le levier d'étrier (40, 50) en rotation par rapport au corps (30) **caractérisé par** une chambre de rétention de fluide (41, 51) pour retenir le fluide, la chambre de rétention de fluide (41, 51) étant définie par le levier d'étrier (40, 50) et l'extrémité de la broche (35, 36).

2. Étrier de frein (20) de la revendication 1, dans lequel une pression dans la chambre de rétention de fluide (41, 51) est supérieure ou égale à une charge appliquée au levier d'étrier (40, 50) lorsque le freinage n'est pas effectué.

3. Étrier de frein (20) de la revendication 1 ou 2, dans lequel un palier radial (65) qui correspond à une charge agissant dans une direction orthogonale à un axe de la broche (35, 36) est prévu dans la chambre de rétention de fluide (41, 51).

4. Étrier de frein (20) de l'une quelconque des revendications 1 à 3, dans lequel le levier d'étrier (40, 50) comprend une paire de leviers supérieur et inférieur (47, 48, 57, 58),
dans lequel une tige de liaison (46, 56) qui relie verticalement les leviers supérieur et inférieur (47, 48, 57, 58) est prévue,
dans lequel le levier supérieur (47, 57) de la paire de leviers supérieur et inférieur (47, 48, 57, 58) est relié à une extrémité supérieure de la broche (35, 36) via la chambre de rétention de fluide (41, 51), et
dans lequel la tige de liaison (46, 56) relie la paire de leviers supérieur et inférieur (47, 48, 57, 58) de sorte qu'un espace (49, 59) soit formé entre un levier inférieur (48, 58) de la paire de leviers supérieur et inférieur (47, 48, 57, 58) et une extrémité inférieure de la broche (35, 36).

5. Étrier de frein (20) de la revendication 4, dans lequel un palier radial (66) qui correspond à une charge agissant dans une direction orthogonale à un axe de la broche (35, 36) est prévu dans l'espace (49, 59).

6. Étrier de frein (20) de l'une quelconque des revendications 1 à 5, dans lequel le fluide retenu dans la chambre de rétention de fluide (41, 51) est de l'air.
